# EUROPEAN PATENT SPECIFICATION

(11) **EP 2 575 349 B1**
(45) Date of publication and mention of the grant of the patent: **28.09.2016**
(21) Application number: 12170039.7
(22) Date of filing: 30.05.2012
(51) Int. Cl.: H04N 1/409

(54) **Image inspecting apparatus**
Bildprüfgerät
Appareil d'inspection d'image

(30) Priority: 29.09.2011 JP 2011214308
(43) Date of publication of application: 03.04.2013
(73) Proprietor: SCREEN Holdings Co., Ltd., Kyoto (JP)
(72) Inventor: Koike, Shirou, Kyoto, Kyoto 602-8585 (JP); Eto, Hideyuki, Kyoto, Kyoto 602-8585 (JP); Mizuta, Tomohisa, Kyoto, Kyoto 602-8585 (JP); Kato, Tomotaka, Kyoto, Kyoto 602-8585 (JP); Imamura, Atsushi, Kyoto, Kyoto 602-8585 (JP); Sato, Toshihiro, Kyoto, Kyoto 602-8585 (JP); Kiyohara, Satoru, Kyoto, Kyoto 602-8585 (JP)
(74) Representative: Goddar, Heinz J.

(56) References cited:
- US-A1- 2009 080 034
- US-A1- 2009 161 124
- US-A1- 2009 262 402

## Description

### BACKGROUND OF THE INVENTION

### 1. Field of the Invention

This invention relates to an image inspecting apparatus for inspecting print images formed on both front and back sides of a recording medium.

### 2. Description of the Related Art

In a printing system for producing prints, in order to secure the quality of prints, an image inspecting apparatus is used to inspect print images formed on a recording medium such as printing paper. Prints determined as a result of inspection to have defects on the print images are discarded as faulty prints.

For preventing a high incidence of faulty prints, it is effective to trace the cause of the defects on the print images, and feed the information back to printing control. However, in the present circumstances, the types of defects and the degrees of defects are determined according to a verification condition sensuously set by visual observation, and the setting of the verification condition varies with the operator's level of skill. Therefore, differences occur in determination of defects of print images. In order to reduce such variations in the setting of the verification condition occurring with the operator's level of skill, a defective pattern classification determining apparatus has been proposed in Japanese Unexamined Patent Publication H7-333170. This apparatus includes a fuzzy circuit and a neural network to carry out a fuzzy inference of characteristics and the like of defects, and use a self-learning function of the neural network, thereby to enable even an unskilled operator to carry out easily registration and change of the types of defective patterns to be determined.

In inspecting print images formed on both front and back sides of printing paper, a print-through, in which a pattern or the like printed on the front side (first side) is seen through on the back side (second side), may be erroneously determined defective. Thus, Japanese Unexamined Patent Publication No. 2009-78457 discloses a data processing apparatus for reducing the chances of the print-through being erroneously determined defective. This apparatus sets a threshold based on the attribute of paper, for a density difference between image data of the first side and image data of the second side, and determines areas exceeding the threshold to be faulty areas.

However, when the defective pattern classification determining apparatus described in Unexamined Patent Publication H7-333170 is employed in a printing system for variable printing in which a different pattern or design is printed on each printing sheet, a certain amount of learning frequency is required for properly teaching a filter setting to realize a defect classification. It is difficult to prepare proper instruction data in advance.

When variable printing is carried out to print a different pattern or design on each printing sheet, a print-through occurring in duplex printing, with a pattern or the like on the first side being seen through on the second side, is found in a different position or degree on each printing sheet. Therefore, when, as in the data processing apparatus described in Japanese Unexamined Patent Publication No. 2009-78457, a threshold is set based on the attribute of paper to determine faulty areas, the threshold will be set high for thin paper in order not to determine the print-through to be a defect. As a result, there is a possibility of overlooking defects to be detected.

Prior art relating to the preamble of claim 1 may be found in US 2009/080034 A1.

### SUMMARY OF THE INVENTION

The object of this invention, therefore, is to provide an image inspecting apparatus for enabling a defect classification to be adjusted easily in the course of printing.

The above object is fulfilled, according to this invention, by an image inspecting apparatus according to claim 1.

According to such an image inspecting apparatus, even in variable printing with large variations of patterns and/or designs, the second side filter setting can be changed to enable adjustment of a fault classification in the course of printing, according to the patterns and/or designs. Consequently, images printed on both sides of the printing paper can be inspected with high accuracy.

Other features and advantages of the invention will be apparent from the following detailed description of the embodiments of the invention.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is an overview schematically showing a principal portion of an image recording system employing an image inspecting apparatus according to this invention;
Fig. 2 is an overview schematically showing part of the bottom of a print head;
Fig. 3 is an explanatory view schematically showing an outline of a fault classification in image inspection;
Fig. 4 is a block diagram showing a functional construction of the image inspecting apparatus according to this invention;
Fig. 5 is a block diagram showing a functional construction of an image inspecting apparatus according to a second embodiment;
Fig. 6 is a schematic view showing an example of display modes on a display unit;
Fig. 7 is a schematic view showing an example of display modes on the display unit; and
Fig. 8 is a block diagram showing a functional construction of an image inspecting apparatus according to a third embodiment.

### DESCRIPTION OF THE PREFERRED EMBODIMENTS

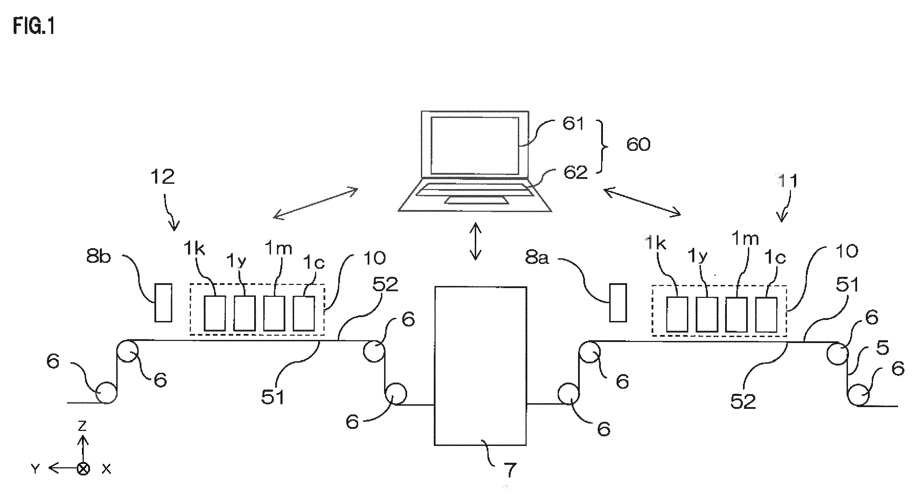

Embodiments of this invention will be described with reference to the drawings. Fig. 1 is an overview schematically showing a principal portion of an image recording system employing an image inspecting apparatus according to this invention.

This image recording system is constructed to perform four-color printing in inkjet mode on printing paper 5 which is an elongated recording medium movable as guided by guide rollers 6. As shown in Fig. 1, the image recording system includes a first-side printing station 11 for printing on a first side (front side) 51 of the printing paper 5, a second-side printing station 12 for printing on a second side (back side) 52, a reversing unit 7 for reversing the printing side of the printing paper 5 from the first side 51 to the second side 52, and a computer 60 for controlling the entire image recording system.

The computer 60 has a RAM and a ROM as memory devices, and a CPU as an arithmetic unit, which are mounted inside, and also has a display unit 61 and an input unit 62. The display unit 61 acts as a display device for displaying print images on the first side 51 of the printing paper 5 picked up by an imaging unit 8a provided for the first-side printing station 11, and print images on the second side 52 of the printing paper 5 picked up by an imaging unit 8b provided for the second-side printing station 12.

Each of the imaging units 8a and 8b has CCD image sensors arranged in X-direction to act as an image pickup device, and transmits image data of the print images read by the CCD image sensors to the image inspecting apparatus to be described hereinafter.

Each of the first-side printing station 11 and second-side printing station 12 includes a printing portion 10 having, as arranged in the stated order, a print head 1c for printing in cyan (C) ink on the printing paper 5, a print head 1m for printing in magenta (M) ink on the printing paper 5, a print head 1y for printing in yellow (Y) ink on the printing paper 5, and a print head 1k for printing in black (K) ink on the printing paper 5.

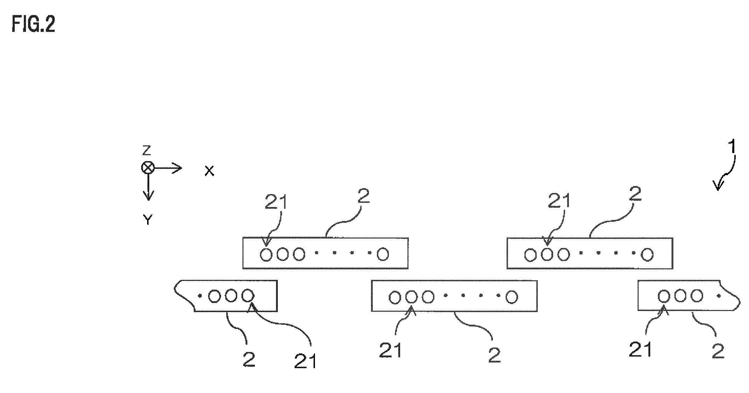

Fig. 2 is an overview schematically showing part of the bottom of a print head 1.

Each of the print heads 1c, 1m, 1y and 1k (hereinafter collectively called "print head 1") has a plurality of nozzle heads 2 arrayed over an area substantially corresponding to the width of the printing paper 5 perpendicular to the moving direction of the printing paper 5 (in the direction perpendicular to the plane of Fig. 1). A plurality of such arrays are provided in the moving direction of the printing paper 5. As shown in Fig. 2, numerous ink discharge nozzles 21 are formed in the bottom of each nozzle head 2, at constant intervals in X-direction. The nozzle heads 2 are arranged in X-direction transversely of the printing paper 5, and are alternately arranged in Y-direction which is the moving direction of the printing paper 5. Thus, the nozzles 21 are arranged at constant intervals over an area substantially corresponding to the width of the printing paper 5. In this image recording system, the first-side printing station 11 and second-side printing station 12 discharge ink from the nozzle heads 2 in the print head 1 of each color, according to data for image formation expressed with CMYK color components, thereby forming color print images on the first side 51 and second side 52 of the printing paper 5. Duplex printing is carried out only by passing the printing paper 5 once under the printing portions 10 of the first-side printing station 11 and second-side printing station 12. After the duplex printing, the elongated printing paper 5 is cut into sheets by a cutting mechanism not shown.

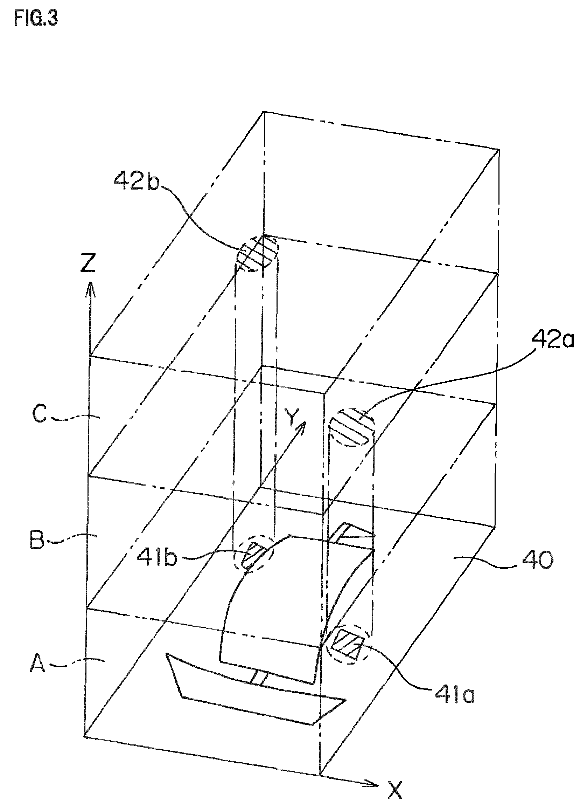

Next, the image inspecting apparatus according to this invention will be described. Fig. 3 is an explanatory view schematically showing an outline of a fault classification in image inspection. In Fig. 3, X-axis corresponds to the width direction of the printing paper 5 in Fig. 1, and Y-axis corresponds to the transport direction of the printing paper 5 in Fig. 1. Z-axis represents evaluation values indicating the degrees of faults.

In image inspection, photo images 40 for one sheet picked up by the imaging units 8a and 8b are first compared with a reference image to detect a difference therebetween. For example, a density comparison is made between corresponding pixels of the reference image and photo images 40, and pixel positions exceeding a predetermined density difference are detected as faults. For these detected faults, evaluation values are calculated based on some conditions relating to the level of density difference, the size (area) of fault, the color and so on. Based on the evaluation values, the faults are classified as a slight fault A which is acceptable for shipment, a middling fault B, and a serious fault C which is not fit for shipment. In this specification, the elements for making such a fault classification are called filters. Filter setting includes setting of filter values which are boundary values between the slight fault A, middling fault B and serious fault C, and setting of area threshold values and the like which constitute the filter values.

The photo image 40 shown in Fig. 3 is an image seen from the second side 52 of the printing paper 5 having images recorded on both sides. This image includes print-through areas 41a and 41b where a pattern printed on the first side 51 can be seen on the second side 52. A print-through is a printing defect which is not regarded as faulty in inspection by visual observation of the operator, as distinct from a strike-through in which an ink on the first side 51 has seeped through to the second side 52 (the strike-through being classified as the fault not fit for shipment).

However, when a filter of the same setting is applied to the first side 51 and second side 52, as indicated by areas 42a and 42b in Fig. 3, the print-through often becomes faults having high evaluation values close to a boundary between the middling fault B and the serious fault C. In variable printing in which a pattern or design is varied for each printing sheet, the appearance situation of the print-through areas 41a and 41b changes in the course of printing. Therefore, in the image inspecting apparatus according to this invention, an exception rule is provided for changing the filter values or excluding print-through areas from the classification by filter value. Further, a strike-through detection rule is provided for enabling detection of a strike-through from print-through areas. Thus, the image inspecting apparatus employs a construction for determining the strike-through to be a printing defect, but not determining the print-through to be a printing defect.

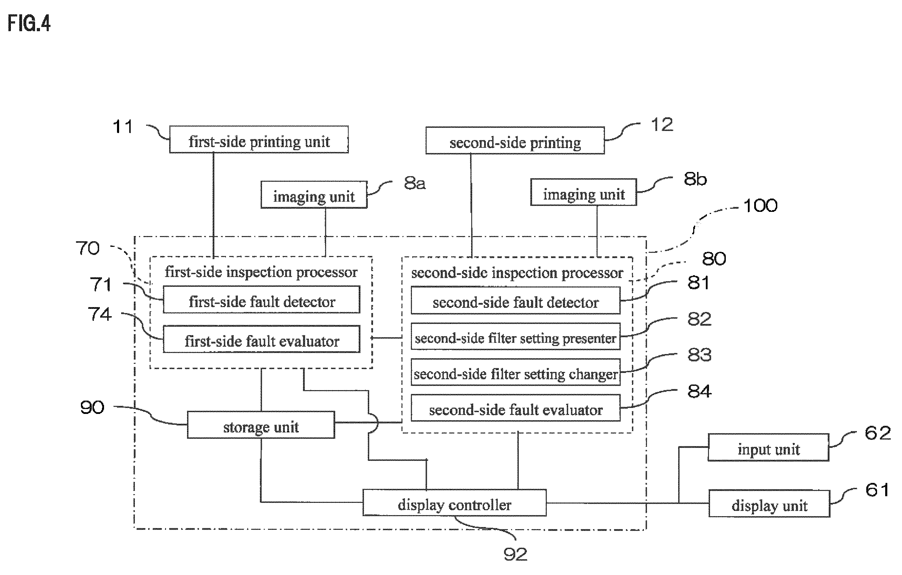

Fig. 4 is a block diagram showing a functional construction of the image inspecting apparatus according to this invention.

This image inspecting apparatus 100 includes a first-side inspection processor 70 for inspecting print images formed on the first side 51 of the printing paper 5, a second-side inspection processor 80 for inspecting print images formed on the second side 52 of the printing paper 5, a storage unit 90 for storing printing result information and other information, and a display controller 92 for receiving a selecting operation by the operator from the input unit 62, and displaying, in a predetermined display mode on the display unit 61, contents selected from among first-side photo images, second-side photo images, and results of inspection by the first-side inspection processor 70 and second-side inspection processor 80.

Further, the first-side inspection processor 70 includes a first-side fault detector 71 and a first-side fault evaluator 74. The second-side inspection processor 80 includes a second-side fault detector 81, a second-side filter setting presenter 82, a second-side filter setting changer 83 and a second-side fault evaluator 84.

For the image inspection in this image inspecting apparatus 100, when print job data is fed from the computer 60 to start printing by the first-side printing station 11 and second-side printing station 12, the image inspecting apparatus 100 acquires photo data from the imaging units 8a and 8b at predetermined time intervals. The first-side inspection processor 70 performs a first-side inspection of the printing paper 5, and the second-side inspection processor 80 a second-side inspection.

In the first-side inspection, the first-side inspection processor 70 acquires photo data from the imaging unit 8a, and the first-side fault detector 71 compares a reference image and a photo image produced from the photo data to detect a first-side fault. The reference image used here has been created by the first-side inspection processor 70 acquiring data for first-side image formation included in the print job data from the first-side printing station 11, and converting CMYK data which is the data for first-side image formation into RGB data corresponding to reading resolution of the imaging unit 8a. The first-side fault detector 71 compares densities of the reference image and photo image on a pixel-by-pixel basis, and determines a density difference exceeding a predetermined threshold to be a fault. Then, the first-side fault evaluator 74 applies a first-side filter to the fault detected on the first side, and evaluates the fault to determine whether the fault corresponds to one of the slight fault A which is acceptable for shipment, the middling fault B and the serious fault C which is not fit for shipment, which are described hereinbefore with reference to Fig. 3. In this embodiment, the first-side filter which is set before start of the printing is used until finish of the printing.

In the second-side inspection, the second-side inspection processor 80 acquires photo data from the imaging unit 8b, and the second-side fault detector 81 compares a reference image and a photo image produced from the photo data to detect a second-side fault. The reference image used here, as has the reference image in the first-side inspection, has been created by the second-side inspection processor 80 acquiring data for second-side image formation included in the print job data from the second-side printing station 12, and converting CMYK data which is the data for second-side image formation into RGB data corresponding to reading resolution of the imaging unit 8b. The second-side fault detector 81 compares densities of the reference image and photo image on a pixel-by-pixel basis, and determines a density difference exceeding a predetermined threshold to be a fault. The threshold for the density difference used by the second-side fault detector 81 has the same value as the threshold used by the first-side fault detector 71.

Then, the second-side filter setting presenter 82 presents a second-side filter setting set at this time in the course of printing. The second-side filter setting presenter 82 presents the current second-side filter setting to the operator by displaying the contents of the second side filter setting on the display unit 61. The second-side fault evaluator 84, by applying the second-side filter of the setting presented, evaluates the fault detected by the second-side fault detector 81. When the second side filter setting needs to be changed as a result of fault evaluation, the second-side filter setting changer 83 changes the second-side filter setting by using the first-side photo data acquired through the first-side inspection processor 70.

Whether the second side filter setting needs to be changed as a result of fault evaluation is determined by the operator checking the result of the second-side fault evaluation displayed on the display unit 61. The change of the second side filter setting by the second-side filter setting changer 83 using the first-side photo data can be made either through an operation by the operator, or automatically without an operation by the operator.

In the case of the change made through an operation by the operator, the operator visually compares the first-side photo image and the result of the second-side fault evaluation displayed on the display unit 61. When it is confirmed that a portion with a deep color of ink on the first-side photo image is visible on the second side due to print-through, and that the fault in this area is classified as the middling fault B or the serious fault C, the second-side filter setting is changed to a state desired by the operator, in response to an input made by the operator to the input unit 62.

For the automatic change, for example, an area that exceeds a predetermined density on the first side is obtained and stored from density data included in the first-side photo data. Any such area exceeding the predetermined density can cause a print-through, and therefore a setting change is made such as by automatically changing the filter value.

The changed second-side filter setting is stored as a latest update of the second-side filter setting, and the second-side filter setting presenter 82 displays the updated contents of the second-side filter setting on the display unit 61. The second-side filter of the changed setting is applied to print images printed after the change of the second-side filter setting, and the second-side fault evaluator 84 evaluates faults on the second side. This image inspecting apparatus 100 is constructed to allow the second-side filter setting to be changed repeatedly when the second-side filter setting needs to be changed in the course of printing from start to finish of the printing.

The results of the first-side inspection and second-side inspection are successively displayed on the display unit 61. By checking the displays made on the display unit 61, the operator can easily determine printed sheets including faults classified as the serious fault C (faulty prints not fit for shipment).

When the printing is completed, and the first-side inspection and second-side inspection are completed, the image inspecting apparatus 100 stores the second-side filter setting at the time of completion as the latest second-side filter setting in the storage unit 90. Besides the latest second-side filter setting, the storage unit 90 stores, as printing result information, the results of the first-side inspection and second-side inspection including information on faults detected by the first-side fault detector 71 and faults detected by the second-side fault detector 81. The second-side filter setting, when the setting change is repeated in the course of printing, can vary greatly between times of printing start and printing finish. Therefore, this image inspecting apparatus 100 is constructed to fetch the latest second-side filter setting, and remake the fault classification by applying the second-side filter to the fault detection results from the first sheet to the last sheet (faults detected by the first-side fault detector 71 and faults detected by the second-side fault detector 81).

The printing result information may be transmitted to a controller of the image recording system to be stored as a JDF (Job Definition Format) file along with the first-side filter setting and second-side filter setting. Then, by developing the first-side filter setting and second-side filter setting from the description of the JDF in time of reprinting, the frequency of changing the filter setting in the course of printing can be held down in a reprinting or similar printing operation.

The first-side inspection processor 70 in this embodiment may further include a first-side filter setting presenter and a first-side filter setting changer having functions similar to those of the second-side filter setting presenter 82 and second-side filter setting changer 83 of the second-side inspection processor 80. In the described embodiment, setting changes cannot be made in the course of printing for the first-side filter setting. However, by adding such modification, the setting changes in the course of printing become possible also for the first-side filter setting.

When the printing paper 5 is a preprinted form having a certain pattern printed beforehand, settings of the first-side filter and second-side filter may be changed according to preprint areas, thereby to be able to prevent the preprinted image from being erroneously determined to be a printing defect. Print job data of the preprinting may be acquired beforehand, to use position information on fixed print areas and variable print areas on the preprinted form. Then, setting of each of the first-side filter and the second-side filter may be varied, and such varied setting may be displayed on the display unit 61 by way of presentation to the operator.

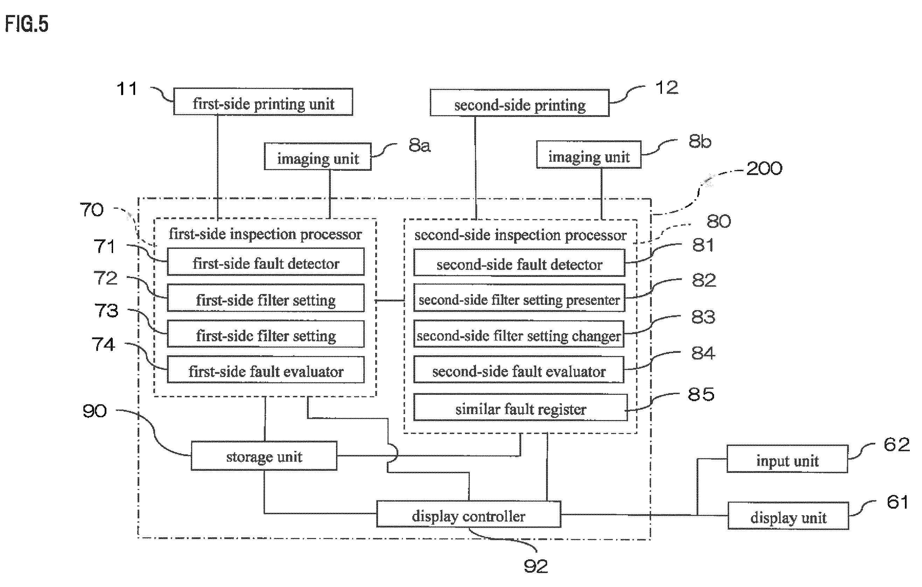

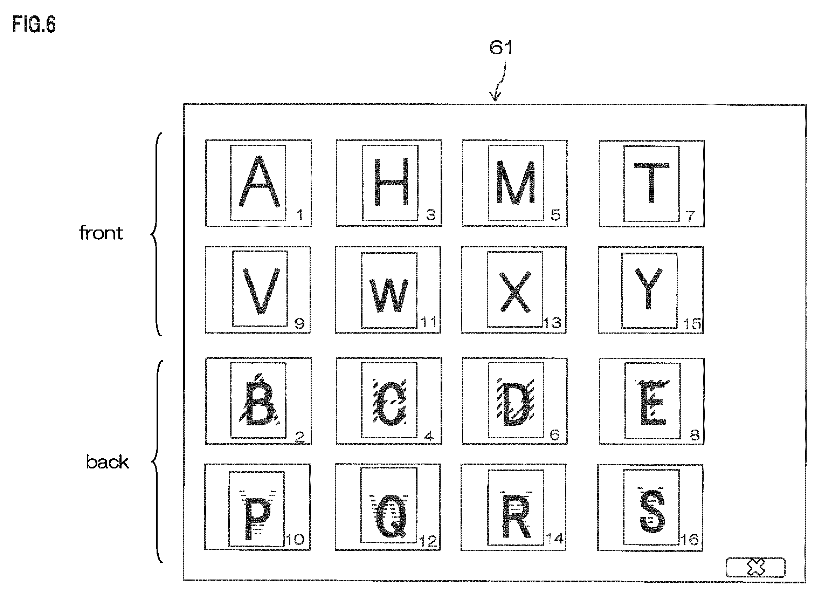

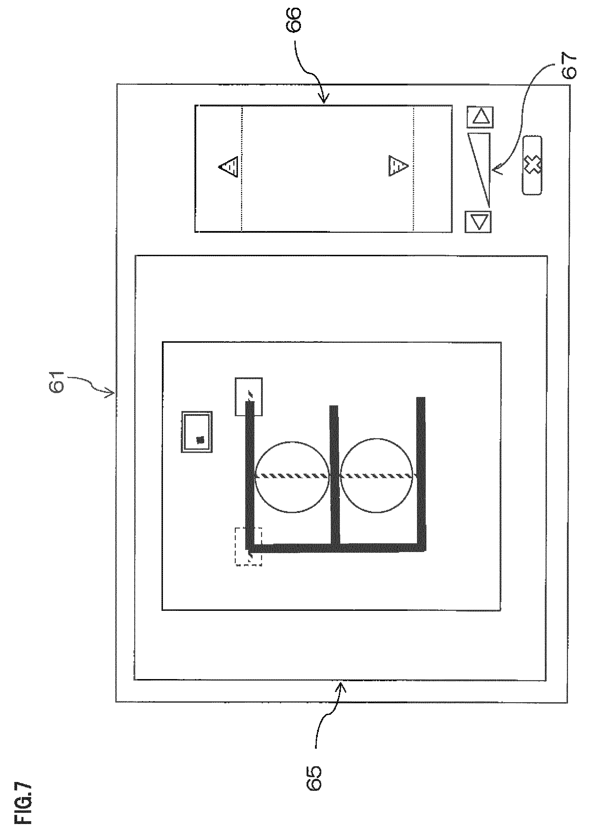

Fig. 5 is a block diagram showing a functional construction of an image inspecting apparatus 200 according to a second embodiment. Figs. 6 and 7 are schematic views showing examples of display modes on the display unit 61. Components identical to those of the foregoing embodiment are shown with the same signs, and will not particularly be described.

In this image inspecting apparatus 200, as shown in Fig. 5, the first-side inspection processor 70 includes a first-side filter setting presenter 72 and a first-side filter setting changer 73, and the second-side inspection processor 80 includes a similar fault register 85. A similar fault here means a fault which, like the print-through described hereinbefore with reference to Fig. 3, is not determined a serious fault in visual inspection by the operator, but has a high evaluation value indicating a degree of fault and is highly likely to be determined a serious fault in mechanical inspection.

The second-side fault evaluator 84 classifies faults detected by the second-side fault detector 81, by applying a second-side filter of the setting presented by the second-side filter setting presenter 82. As a result, the similar fault register 85 registers, as a similar fault, a fault that can be excluded from among the faults classified as the middling fault B and serious fault C by applying the exception rule.

When printing is started and print images are inspected by the first-side inspection processor 70 and second-side inspection processor 80, as shown in Fig. 6, eight photo images on the front side (first side 51) and eight photo images on the back side (second side 52) are displayed in reduced size on the display unit 61, such that the front and back of each printed sheet cut from the elongated printing paper 5 after the printing are in a corresponding relationship. Results of application of the first-side filter and second-side filter are also displayed as superimposed on the respective photo images. The second-side photo images have, besides the images formed on the second side, mirror-reversed images of the first-side photo images appearing in a density lower than the density of the original images. Since the results of filter application and the photo images are displayed in superimposition on the display unit 61, the operator can visually recognize a situation of fault occurrence on the print images.

When the operator operates the input unit 62 and selects one of the photo images displayed in reduced size as in Fig. 6, the selected photo image is displayed in enlarged size as shown in Fig. 7. This display mode provides a test object display area 65 for displaying the photo image and the filter application results in superimposition, and a setting area 66 which shows a current filter setting and the like. In Fig. 7, the test object display area 65 shows, in superimposition, the photo image on the second side 52 and the results of having applied the second-side filter. Display control of the display modes shown in Figs. 6 and 7 is carried out by the display controller 92.

The test object display area 65 displays faults classified as the middling fault B and serious fault C by the first-side fault evaluator 74 and second-side fault evaluator 84, and also displays, in rectangular frames, areas where the faults exist above a predetermined occurrence frequency. The long sides of these rectangular frames correspond to the widths (lengths in X-direction in Fig. 2) of the nozzle heads 2 of the inkjet image recording system having formed this print image. And the photo image is divided into rectangular areas each having one side corresponding to the width of a nozzle head 2. Fault occurrence frequencies on a plurality of printed sheets are calculated for each of the divided rectangular areas.

When faults occur in the same area of a plurality of printed sheets in variable printing, suspicion points to faulty discharge of an ink discharge nozzle 21, dirt adhesion to the transport path of the printing paper 5 (e.g. dirt transfer from the guide rollers 6) or other trouble not related to variations of the pattern. Therefore, fault occurrence frequencies in this rectangular area are calculated using 100 printed sheets, for example. The fault occurrence frequencies are divided into three levels of high, middle and low, which are displayed in frames of different colors, for example, so that the operator may identify the fault occurrence frequencies. Since one side of each rectangular frame is made to correspond to the width of a nozzle head 2, the fault occurrence frequencies serve as useful information for printing control of each nozzle head 2. Thus, this embodiment enables the operator to recognize a fault occurrence frequency for each predetermined area of the printed sheets, and to grasp a relation between fault occurring position and fault occurrence frequency.

For expediency of illustration, Fig. 7 depicts an area of high fault occurrence frequency in a double line frame, an area of middling frequency in a solid line frame, and an area of low frequency in a broken line frame. The positions of the faults classified as the middling fault B and serious fault C by the first-side fault evaluator 74 and second-side fault evaluator 84 can be indicated by X marks or the like arranged on the photo image in the test object display area 65. Such positions are omitted from Fig. 7.

In the example displayed in the test object display area 65 of Fig. 7, no rectangular frame is displayed since the fault occurrence frequency is not high, but the areas having the faults classified as the middling fault B and serious fault C are enclosed in circles. This shows that there are similar faults considered to be print-throughs. The operator selects these encircled areas by operating the input unit 62, and registers these areas as similar fault areas. The faults in the areas registered as similar fault areas are excluded from further consideration. However, faults that can be determined strike-throughs from density differences between the reference image and the photo images, mainly, are left as faults. This reduces the chances of print-throughs being erroneously determined to be serious faults.

Subsequently, the second-side filter setting is changed. The setting area 66 includes an adjustment button 67. The operator can change the filter value by moving the adjustment button 67 through the input unit 62. A fault classification is made by applying the second-side filter changed by the second-side fault evaluator 84, and its results are displayed again as superimposed on the second-side photo images.

The changed second-side filter setting can also be used for fault detection results from the first sheet to the last sheet of the printing result information after an end of the printing. Results of application of the second-side filter at this time are also displayed on the display unit 61, as superimposed on the photo images stored in the storage unit 90.

In this embodiment, one side of each rectangular frame corresponds to the width of a nozzle head 2 as the unit for calculating the fault occurrence frequency. Thus, a state of the nozzle head 2 can be determined when divisions are made in the direction of arrangement of the ink discharge nozzles 21 by the width of the nozzle head 2, and the number of faults is integrated for a beltlike area extending in the direction (transport direction of the printing paper 5) perpendicular to the direction of arrangement of the ink discharge nozzles 21. That is, a nozzle head 2 with an integrated total of faults exceeding a first threshold may be out of order, and a nozzle head 2 with an integrated total of faults smaller than a second threshold is considered to require checking before a serious fault arises. In order to notify the operator of such a state of the nozzle head 2 in a simple way, this image inspecting apparatus 200 may additionally include a warning device which gives on the display unit 61 an indication of malfunctioning of the nozzle head 2 having an integrated total of faults exceeding the first threshold, and an indication of checking required of the nozzle head 2 having an integrated total of faults smaller than the second threshold.

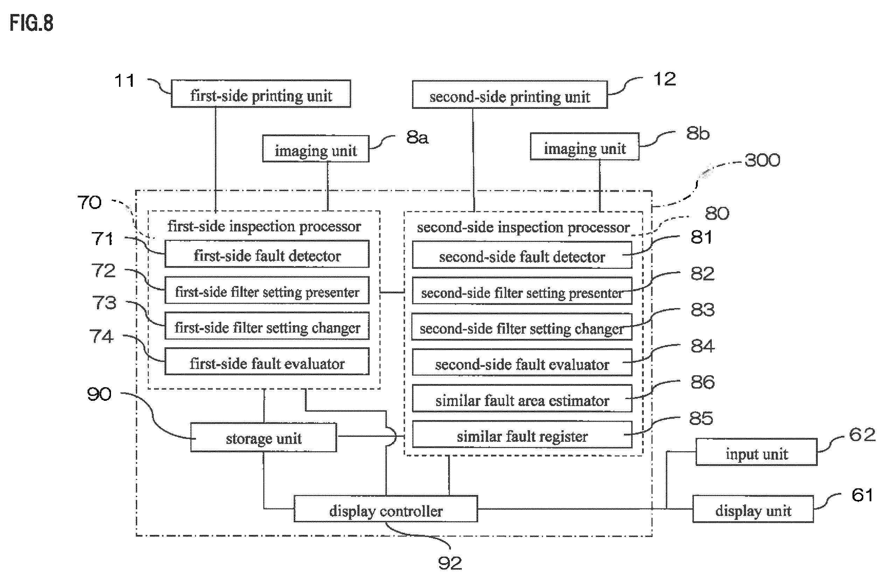

Fig. 8 is a block diagram showing a functional construction of an image inspecting apparatus 300 according to a third embodiment. Components identical to those of the foregoing embodiments are shown with the same signs, and will not particularly be described.

In this image inspecting apparatus 300, the second-side inspection processor 80 further includes a similar fault area estimator 86. The similar fault area estimator 86 determines areas of patterns on the first side 51 in which print-throughs tend to occur, by using the data for first-side image formation and the data for second-side image formation or first-side photo images, thereby to estimate areas on the second side 52 corresponding to the determined areas to be similar fault areas where faults due to the print-through tend to occur.

The process for estimating similar fault areas using the data for first-side image formation and the data for second-side image formation is carried out when developing image data such as RGB data by an RIP (Raster Image Processor) to raster images printable by the image recording system. That is, similar fault areas are estimated by making an alignment of first-side raster image data and second-side raster image data for each printing sheet, and determining areas on the first side having density exceeding a predetermined value. By adding information on the estimated similar fault areas to the second-side filter setting at a time of printing, faults in the estimated similar fault areas can be excluded automatically from application of the second side filter, thereby to reduce the operator's work burden.

Further, when similar fault areas cannot be estimated at the time of development to raster images, the similar fault areas may be estimated by using first-side photo images instead of the data for first-side image formation and the data for second-side image formation. In this case, the first-side inspection processor 70, at the time of first-side inspection, may determine areas exceeding a predetermined density in the first-side photo images, and by using this information, the second-side inspection processor 80 may estimate similar fault areas.

In order not to lower the accuracy of detecting faults due to strike-through, the estimated similar fault areas are subjected to an inspection rule for not excluding faults having values excluding a predetermined value of the density difference between the reference image and photo images, for example, to assure a discrimination between strike-through and print-through.

## Claims

1. An image inspecting apparatus (100) for picking up print images formed on a recording medium with imaging units (8a, 8b), and having a display control device (92) for receiving a selecting operation regarding a plurality of display modes for the images acquired by the imaging units (8a, 8b), and displaying the images in a selected display mode on a display unit (61), to inspect the print images formed on both a first side (51) and a second side (52) of the recording medium, the apparatus comprising:
a first-side fault detecting device (71) for detecting faults on the first side (51) from differences between a first-side reference image created from data for first-side image formation included in print job data for forming the images on the first side (51) of the recording medium, and first-side photo images created from first-side photo data obtained by picking up the images formed on the first side (51) of the recording medium;
a first-side fault evaluating device (74) for evaluating the faults on the first side (51) as a slight fault, a middling fault or a serious fault by applying a first-side classification element to classify the faults detected by the first-side fault detecting device (71);
a second-side fault detecting device (81) for detecting faults on the second side (52) from differences between a second-side reference image created from data for second-side image formation included in the print job data for forming the images on the second side (52) of the recording medium, and second-side photo images created from second-side photo data obtained by picking up the images formed on the second side (52) of the recording medium;
a second-side fault evaluating device (84) for evaluating the faults on the second side (52) by applying a second-side classification element to classify the faults detected by the second-side fault detecting device (81);
a second-side classification element setting changing device (83) for repeatedly changing in the course of printing from start to finish of the printing, by using the first-side photo image data and comparing the first-side photo images and the second-side faults, a setting of a second-side classification element presented by a second-side classification element setting presenting device (82); and
a storage device (90) for storing printing result information including the setting of the first-side classification element used by the first-side fault evaluating device (74) and the setting of the second-side classification element used by a second-side fault evaluating device (84), **characterized in that**
the second-side fault evaluating device (84) is configured to evaluate the faults on the second side (52) as a slight fault, a middling fault or a serious fault by applying the second-side classification element to classify the faults detected by second-side fault detecting device (81);
and further **characterized by**
the second-side classification element setting presenting device (82) being configured to present the setting of the second-side classification element to classify the faults on the second side (52) evaluated by the second-side fault evaluating device (84) by displaying on the display unit (61);
and a similar fault registering device (85) for registering, as a similar fault area, an area having occurrence of a similar fault that should be excluded from results of a fault classification by the second-side fault evaluating device (84), by applying a strike-through detection rule for enabling detection of a strike-through from print-through areas, and by applying an exception rule for excluding print-through areas from classification.

2. The image inspecting apparatus according to claim 1, **characterized in that** the second-side classification element setting changing device (83) is arranged to change the setting of the second-side classification element to be a setting determined based on the data for first-side image formation.

3. The image inspecting apparatus according to claim 1 or 2, comprising a similar fault area estimating device (86) for estimating, by using the data for first-side image formation and the data for second-side image formation, or the first-side photo images, a similar fault area having occurrence of a similar fault that should be excluded from the faults on the second side (52), by applying a strike-through detection rule for enabling detection of a strike-through from print-through areas, and by applying an exception rule for excluding print-through areas from classification.

4. The image inspecting apparatus according to any one of claims 1 to 3, **characterized in that** the display control device (92) is arranged to display results of the faults classified by the first-side fault evaluating device (74) through application of the first-side filter, and results of the faults classified by the second-side fault evaluating device (84) through application of the second-side filter, as superimposed on the first-side photo images and the second-side photo images on the display unit (61).

5. The image inspecting apparatus according to any one of claims 1 to 4, comprising:
a first -side filter setting presenting device (72) for presenting the setting of the first-side filter; and
a first-side filter setting changing device (73) for changing the setting of the first-side filter presented by the first-side filter setting presenting device (72).

6. The image inspecting apparatus according to claim 5, **characterized in that**:
the first-side filter setting changing device (73) is arranged to change the setting of the first-side filter to a setting determined based on position information on fixed print areas and variable print areas on a preprinted form included in the printing job data; and
the second-side filter setting changing device (83) is arranged to change the setting of the second-side filter to a setting determined based on the position information on the fixed print areas and the variable print areas on the preprinted form included in the printing job data.

7. The image inspecting apparatus according to any one of claims 1 to 6, **characterized in that** the display control device (92) is arranged to display an occurrence frequency of the faults calculated by adding up faults detected in each of areas formed by dividing the second-side photo images at predetermined intervals with respect to a plurality of printing sheets, as superimposed on the second-side photo images on the display unit (61).

8. The image inspecting apparatus according to claim 7, which is arranged to inspect images printed by an inkjet image recording system which records prints by moving printing paper relative to a printing head (1) in a direction perpendicular to a direction of arrangement of numerous nozzles (21) for discharging ink, the printing head (1) including a plurality of nozzle heads (2) each having the nozzles (21) arranged in a direction of width of the printing paper;
**characterized in that** the areas divided at the predetermined intervals are formed by dividing the second-side photo images into rectangles each with one side thereof corresponding to a length in the direction of arrangement of the nozzles (21) of one of the nozzle heads (2).

9. The image inspecting apparatus according to claim 8, comprising a warning device for determining a total of faults for each of the nozzle heads (2) by integrating in the direction perpendicular to the direction of arrangement of the nozzles, the number of faults detected by the first-side fault detecting device (71) and the number of faults detected by the second-side fault detecting device (81), the warning device indicating that a nozzle head (2) with an integrated total of faults exceeding a first threshold is out of order, and that a nozzle head (2) with an integrated total of faults larger than a second threshold and smaller than the first threshold needs to be checked.

10. The image inspecting apparatus according to any one of claims 1 to 9, **characterized in that**:
the second-side fault evaluating device (84) is arranged to re-apply the second-side filter with the setting thereof changed by the second-side filter setting changing device (83), to the faults detected by the second-side fault detecting device (81) and included in the printing result information;
the display control device (92) is arranged to display results of re -application of the second-side filter as superimposed on the second-side photo images; and the storage device (90) is arranged to store the setting of the re-applied second-side filter again, together with the printing result information.

## Patentansprüche

1. Bildprüfgerät (100) zum Aufnehmen von gedruckten Bildern, die auf einem Aufzeichnungsmedium mit Bildgebungseinheiten (8a, 8b) gebildet sind, und mit einer Anzeigesteuervorrichtung (92) zum Empfangen einer Auswahloperation in Bezug auf eine Anzahl von Anzeigebetriebsarten für die von den Bildgebungseinheiten (8a, 8b) akquirierten Bilder, und Anzeigen der Bilder in einer ausgewählten Anzeigebetriebsart auf einer Anzeigeeinheit (61), zum Prüfen der gedruckten Bilder, die sowohl auf einer ersten Seite (51) als auch auf einer zweiten Seite (52) des Aufzeichnungsmediums gebildet sind, wobei die Vorrichtung umfasst:
eine Fehlererfassungseinrichtung (71) der ersten Seite, zum Erfassen von Fehlern auf der ersten Seite (51) aus Unterschieden zwischen einem Bezugsbild der ersten Seite, das aus Daten für eine Bilderzeugung auf der ersten Seite erzeugt ist, die in Druckauftragsdaten zum Erstellen der Bilder auf der ersten Seite (51) des Aufzeichnungsmediums enthalten sind, und Fotobildern der ersten Seite, die von Fotodaten der ersten Seite, die durch Aufnehmen der auf der ersten Seite (51) des Aufzeichnungsmediums erhalten worden sind, erzeugt sind;
eine Fehlerauswertungseinrichtung (74) der ersten Seite zum Auswerten der Fehler auf der ersten Seite (51) als einen leichten Fehler, einen mittleren Fehler oder einen ernsthaften Fehler durch Anwenden eines Klassifizierungselements der ersten Seite, um die Fehler, die durch die Fehlererfassungseinrichtung (71) der ersten Seite erfasst worden sind, zu klassifizieren;
eine Fehlererfassungseinrichtung (81) der zweiten Seite, zum Erfassen von Fehlern auf der zweiten Seite (52) aus Unterschieden zwischen einem Bezugsbild der zweiten Seite, das aus Daten für eine Bilderzeugung der zweiten Seite erzeugt ist, die in Druckauftragsdaten zum Erstellen der Bilder auf der zweiten Seite (52) des Aufzeichnungsmediums enthalten sind, und Fotobildern der zweiten Seite, die von Fotodaten der zweiten Seite, die durch Aufnehmen der auf der zweiten Seite (52) des Aufzeichnungsmediums erstellten Bilder erhalten worden sind, erzeugt sind;
eine Fehlerauswertungseinrichtung (84) der zweiten Seite zum Auswerten der Fehler auf der zweiten Seite (52) durch Anwenden eines Klassifizierungselements der zweiten Seite, um die Fehler, die durch die Fehlererfassungseinrichtung (81) der zweiten Seite erfasst worden sind, zu klassifizieren;
eine Einstellungsveränderungseinrichtung (83) für ein Klassifizierungselement der zweiten Seite, um im Verlauf eines Druckvorgangs vom Beginn bis zum Ende des Druckvorgangs unter Verwendung der Fotobilddaten der ersten Seite und durch Vergleichen der Fotobilder der ersten Seite und der Fehler der zweiten Seite eine Einstellung eines Klassifizierungselements der zweiten Seite wiederholt zu verändern, vorgelegt durch eine Einstellungsvorlageeinrichtung (82) für ein Klassifizierungselement der zweiten Seite; und
eine Speichereinrichtung (90) zum Speichern von Druckergebnisinformationen, enthaltend die Einstellung des Klassifizierungselements der ersten Seite, die durch die Fehlerauswertungseinrichtung (74) der ersten Seite verwendet wird, und die Einstellung des Klassifizierungselements der zweiten Seite, die durch eine Fehlerauswertungseinrichtung (84) der zweiten Seite verwendet wird, **dadurch gekennzeichnet, dass**
die Fehlerauswertungseinrichtung (84) der zweiten Seite konfiguriert ist, um die Fehler auf der zweiten Seite (52) als einen leichten Fehler, einen mittleren Fehler oder einen ernsthaften Fehler auszuwerten, durch Anwenden des Klassifizierungselements der zweiten Seite, um die Fehler zu klassifizieren, die durch die Fehlererfassungseinrichtung (81) der zweiten Seite erfasst worden sind;
und weiter **dadurch gekennzeichnet, dass**
die Einstellungsvorlageeinrichtung (82) für ein Klassifizierungselement der zweiten Seite konfiguriert ist, um die Einstellung des Klassifizierungselements der zweiten Seite vorzulegen, um die Fehler auf der zweiten Seite (52), die durch die Auswertungseinrichtung (84) der zweiten Seite ausgewertet worden sind, durch Anzeigen auf der Anzeigeeinheit (61) zu klassifizieren;
und eine Registrierungseinrichtung (85) für einen ähnlichen Fehler, zum Registrieren, als einen ähnlichen Fehlerbereich, eines Bereichs, der die Erscheinung eines ähnlichen Fehlers aufweist, der von Ergebnissen einer Fehlerklassifizierung durch die Fehlerauswertungseinrichtung (84) der zweiten Seite ausgeschlossen werden sollte, durch Anwenden einer Durchschlag-Erfassungsregel zum Ermöglichen der Erfassung eines Durchschlags von Durchdruckbereichen, und durch Anwenden einer Ausnahmeregel zum Ausschließen von Durchdruckbereichen von einer Klassifizierung.

2. Bildprüfgerät nach Anspruch 1, **dadurch gekennzeichnet, dass** die Einstellungsänderungseinrichtung (83) für ein Klassifizierungselement der zweiten Seite eingerichtet ist, um die Einstellung des Klassifizierungselements der zweiten Seite so zu verändern, dass sie eine Einstellung ist, die auf Grundlage der Daten für die Bilderstellung der ersten Seite festgelegt ist.

3. Bildprüfgerät nach Anspruch 1 oder 2, umfassend eine Schätzungseinrichtung (86) eines ähnlichen Fehlerbereichs, zum Einschätzen, unter Verwendung der Daten für die Bilderstellung der ersten Seite und der Daten für die Bilderstellung der zweiten Seite, oder der Fotobilder der ersten Seite, eines ähnlichen Fehlerbereichs, der die Erscheinung eines ähnlichen Fehlers aufweist, der von den Fehlern auf der zweiten Seite (52) ausgeschlossen werden sollte, durch Anwenden einer Durchschlag-Erfassungsregel zum Ermöglichen der Erfassung eines Durchschlags von Durchdruckbereichen, und durch Anwenden einer Ausnahmeregel zum Ausschließen von Durchdruckbereichen von einer Klassifizierung.

4. Bildprüfgerät nach einem der Ansprüche 1 bis 3, **dadurch gekennzeichnet, dass** die Anzeigesteuereinrichtung (92) zum Anzeigen von Ergebnissen der Fehler eingerichtet ist, die durch die Fehlerauswertungseinrichtung (74) der ersten Seite durch Anwendung des Filters der ersten Seite klassifiziert worden sind, und von Ergebnissen der Fehler, die durch die Fehlerauswertungseinrichtung (84) der zweiten Seite klassifiziert worden sind, durch Anwendung des Filters der zweiten Seite, in Überlagerung mit den Fotobildern der ersten Seite und den Fotobildern der zweiten Seite auf der Anzeigeeinheit (61).

5. Bildprüfgerät nach einem der Ansprüche 1 bis 4, umfassend:
eine Einstellungsvorlageeinrichtung (72) des Filters der ersten Seite, zum Vorlegen der Einstellung des Filters der ersten Seite; und
eine Einstellungsänderungseinrichtung (73) des Filters der ersten Seite, zum Verändern der Einstellung des Filters der ersten Seite, die durch die Einstellungsvorlageeinrichtung (72) des Filters der ersten Seite vorgelegt worden ist.

6. Bildprüfgerät nach Anspruch 5, **dadurch gekennzeichnet, dass**:
die Einstellungsänderungseinrichtung (73) des Filters der ersten Seite eingerichtet ist, um die Einstellung des Filters der ersten Seite zu verändern zu einer Einstellung, die bestimmt ist auf der Grundlage von Positionsinformationen auf festen Druckbereichen und auf variablen Druckbereichen auf einem vorgedruckten Formular, das in den Druckauftragsdaten enthalten ist; und
die Einstellungsänderungseinrichtung (83) des Filters der zweiten Seite eingerichtet ist, um die Einstellung des Filters der zweiten Seite zu verändern, zu einer Einstellung, die bestimmt ist auf der Grundlage der Positionsinformationen auf den festen Druckbereichen und auf den variablen Druckbereichen auf dem vorgedruckten Formular, das in den Druckauftragsdaten enthalten ist.

7. Bildprüfgerät nach einem der Ansprüche 1 bis 6, **dadurch gekennzeichnet, dass** die Anzeigesteuereinrichtung (92) eingerichtet ist, um eine Auftretenshäufigkeit der Fehler anzuzeigen, berechnet durch Aufaddieren von Fehlern, die in jedem von Bereichen, die durch Unterteilen der Fotobilder der zweiten Seite an vorbestimmten Intervallen in Bezug auf eine Anzahl von Druckbögen, in Überlagerung mit den Fotobildern der zweiten Seite auf der Anzeigeeinheit (61), erfasst werden.

8. Bildprüfgerät nach Anspruch 7, wobei dieses eingerichtet ist, um Bilder zu prüfen, die durch ein Tintenstrahl-Bildaufzeichnungssystem gedruckt sind, welches Drucke aufzeichnet, in dem Druckpapier relativ zu einem Druckkopf (1) in einer Richtung senkrecht zu einer Richtung der Anordnung von zahlreichen Düsen (21) zum Abgeben von Tinte bewegt wird, wobei der Druckkopf (1) eine Anzahl von Düsenköpfen (2) umfasst, von denen jeder die Düsen (21) aufweist, die in einer Richtung der Breite des Druckpapiers angeordnet sind;
**dadurch gekennzeichnet, dass** die Bereiche, die an den vorbestimmten Intervallen unterteilt sind, durch Unterteilen der Fotobilder der zweiten Seite in Rechtecke gebildet sind, von denen jedes mit einer Seite davon einer Länge in der Richtung der Anordnung der Düsen (21) von einem der Düsenköpfe (2) entspricht.

9. Bildprüfgerät nach Anspruch 8, umfassend eine Warneinrichtung zum Bestimmen einer Gesamtzahl von Fehlern für jeden der Düsenköpfe (2), durch Integrieren in der Richtung senkrecht zu der Richtung der Anordnung der Düsen, der Anzahl von Fehlern, die durch die Fehlererfassungseinrichtung (71) der ersten Seite erfasst worden sind, und der Anzahl von Fehlern, die durch die Fehlererfassungseinrichtung (81) der zweiten Seite erfasst worden sind, wobei die Warneinrichtung anzeigt, dass ein Düsenkopf (2) mit einer integrierten Gesamtzahl von Fehlern, die eine erste Schwelle überschreitet, außer Betrieb ist, und dass ein Düsenkopf (2) mit einer integrierten Gesamtzahl von Fehlern, die größer als eine zweite Schwelle und kleiner als die erste Schwelle ist, überprüft werden muss.

10. Bildprüfgerät nach einem der Ansprüche 1 bis 9, **dadurch gekennzeichnet, dass**:
die Fehlerauswertungseinrichtung (84) der zweiten Seite eingerichtet ist, um das Filter der zweiten Seite erneut anzuwenden, wobei dessen Einstellung durch die Einstellungsänderungseinrichtung (83) des Filters der zweiten Seite verändert worden ist, auf die Fehler, die durch die Fehlererfassungseinrichtung (81) der zweiten Seite erfasst worden sind und in den Druckergebnisinformationen enthalten sind;
die Anzeigesteuereinrichtung (92) eingerichtet ist, um Ergebnisse der erneuten Anwendung des Filters der zweiten Seite anzuzeigen, in Überlagerung mit den Fotobildern der zweiten Seite; und die Speichereinrichtung (90) eingerichtet ist, um die Einstellung des erneut angewendeten Filters der zweiten Seite wiederum zu speichern, zusammen mit den Druckergebnisinformationen.

## Revendications

1. Appareil d'inspection d'images (100) pour capter des images imprimées formées sur un support d'enregistrement avec des unités de traitement d'image (8a, 8b), et ayant un dispositif de commande d'affichage (92) pour recevoir une opération de sélection concernant une pluralité de modes d'affichage pour les images acquises par les unités de traitement d'image (8a, 8b), et pour afficher les images dans un mode d'affichage sélectionné sur une unité d'affichage (61), afin d'inspecter les images imprimées formées à la fois sur un premier côté (51) et sur un deuxième côté (52) du support d'enregistrement, cet appareil comprenant :
un dispositif de détection de défauts sur un premier côté (71) pour détecter des défauts sur le premier côté (51) à partir de différences entre une image de référence sur le premier côté créée à partir de données pour la formation d'images sur le premier côté comprises dans les données du travail d'impression pour former les images sur le premier côté (51) du support d'enregistrement, et des images photographiques du premier côté créées à partir des données photographiques du premier côté en captant les images formées sur le premier côté (51) du support d'enregistrement ;
un dispositif d'évaluation de défauts sur le premier côté (74) pour évaluer les défauts sur le premier côté (51) comme un défaut léger, un défaut moyen ou un défaut grave en appliquant un élément de classification de premier côté pour classifier les défauts détectés par le dispositif de détection de défauts sur le premier côté (71) ;
un dispositif de détection de défauts sur le deuxième côté (81) pour détecter des défauts sur le deuxième côté (52) à partir de différences entre une image de référence sur le deuxième côté créée à partir de données pour la formation d'images sur le deuxième côté comprises dans les données du travail d'impression pour former les images sur le deuxième côté (52) du support d'enregistrement, et des images photographiques du deuxième côté créées à partir des données photographiques du deuxième côté en captant les images formées sur le deuxième côté (52) du support d'enregistrement ;
un dispositif d'évaluation de défauts sur le deuxième côté (84) pour évaluer les défauts sur le deuxième côté (52) en appliquant un élément de classification de deuxième côté pour classifier les défauts détectés par le dispositif de détection de défauts sur le deuxième côté (81) ;
un dispositif de changement de réglage de l'élément de classification du deuxième côté (83) pour changer, de façon répétée pendant l'impression du début à la fin de l'impression, en utilisant des données d'images photographiques du premier côté et en comparant les images photographiques du premier côté et les défauts sur le deuxième côté, un réglage d'un élément de classification du deuxième côté présenté par un dispositif de présentation d'élément de classification du deuxième côté (82) ; et
un dispositif de stockage (90) pour stocker les informations des résultats d'impression comprenant le réglage de l'élément de classification du premier côté utilisé par le dispositif d'évaluation de défauts sur le premier côté (74) et le réglage de l'élément de classification du deuxième côté utilisé par un dispositif d'évaluation de défauts sur le deuxième côté (84), **caractérisé en ce que** le dispositif d'évaluation de défauts sur le deuxième côté (84) est configuré de façon à évaluer les défauts sur le deuxième côté (52) comme un défaut léger, un défaut moyen ou un défaut grave en appliquant l'élément de classification du deuxième côté pour classifier les défauts détectés par le dispositif de détection de défauts sur le deuxième côté (81),
et **caractérisé en outre en ce que**
le dispositif de présentation du réglage de l'élément de classification du deuxième côté (82) est configuré de façon à présenter le réglage de l'élément de classification du deuxième côté pour classifier les défauts sur le deuxième côté (52) évalués par le dispositif d'évaluation de défauts sur le deuxième côté (84) en affichant sur l'unité d'affichage (61) ;
et un dispositif d'enregistrement de défauts similaires (85) pour enregistrer, comme une zone de défaut similaire, une zone contenant un défaut similaire qui devrait être exclu d'une classification de défauts par le dispositif d'évaluation de défauts sur le deuxième côté (84), en appliquant une règle de détection de traversement pour permettre la détection d'un traversement à partir de zones à transvision, et en appliquant une règle d'exception pour exclure les zones de traversement de la classification.

2. Appareil d'inspection d'images selon la revendication 1, **caractérisé en ce que** le dispositif de changement du réglage de l'élément de classification du deuxième côté (83) est agencé de façon à changer le réglage de l'élément de classification du deuxième côté pour un réglage déterminé basé sur les données pour la formation d'images sur le premier côté.

3. Appareil d'inspection d'images selon la revendication 1 ou 2, comprenant un dispositif d'estimation de zones de défauts similaires (86) pour estimer, en utilisant les données pour la formation d'images sur le premier côté et les données pour la formation d'images sur le deuxième côté, ou les images photographiques du premier côté, une zone de défaut similaire contenant un défaut similaire qui devrait être exclu des défauts sur le deuxième côté (52), en appliquant une règle de détection de traversement pour permettre la détection d'un traversement à partir de zones à transvision, et en appliquant une règle d'exception pour exclure les zones de traversement de la classification.

4. Appareil d'inspection d'images selon l'une quelconque des revendications 1 à 3, **caractérisé en ce que** le dispositif de commande d'affichage (92) est agencé de façon à afficher les résultats des défauts classifiés par le dispositif d'évaluation des défauts sur le premier côté (74) au moyen de l'application du filtre du premier côté, et les résultats des défauts classifiés par le dispositif d'évaluation des défauts sur le deuxième côté (84) au moyen de l'application du filtre du deuxième côté, comme superposé sur les images photographiques du premier côté et les images photographiques du deuxième côté sur l'unité d'affichage (61).

5. Appareil d'inspection d'images selon l'une quelconque des revendications 1 à 4, comprenant :
un dispositif de présentation du réglage du filtre du premier côté (72) pour présenter le réglage du filtre du premier côté ; et
un dispositif de changement du réglage du filtre du premier côté (73) pour changer le réglage du filtre du premier côté présenté par le dispositif de présentation du réglage du premier côté (72).

6. Appareil d'inspection d'images selon la revendication 5, **caractérisé en ce que** :
le dispositif de changement du réglage du filtre du premier côté (73) est agencé de façon à changer le réglage du filtre du premier côté pour un réglage déterminé en se basant sur des informations de position sur des zones d'impression fixes et sur des zones d'impression variables sur une forme préimprimée comprise dans les données du travail d'impression ; et
le dispositif de changement du réglage du filtre du deuxième côté (83) est agencé de façon à changer le réglage du filtre du deuxième côté pour un réglage déterminé en se basant sur des informations de position sur les zones d'impression fixes et sur les zones d'impression variables sur la forme préimprimée comprise dans les données du travail d'impression.

7. Appareil d'inspection d'images selon l'une quelconque des revendications 1 à 6, **caractérisé en ce que** le dispositif de commande d'affichage (92) est agencé de façon à afficher une fréquence de présence des défauts calculée en ajoutant les défauts détectés dans chacune des zones formées en divisant les images photographiques du deuxième côté à des intervalles prédéterminés par rapport à une pluralité de feuilles d'impression, comme superposées sur les images photographies du deuxième côté sur l'unité d'affichage (61).

8. Appareil d'inspection d'images selon la revendication 7, qui est agencé de façon à inspecter des images imprimées par un système d'enregistrement d'images à jet d'encre qui enregistre des copies imprimées en déplaçant du papier d'impression par rapport à une tête d'impression (1) dans une direction perpendiculaire à une direction de disposition de jets nombreux (21) pour décharger de l'encre, la tête d'impression (1) comprenant une pluralité de têtes de jets (2) ayant chacune les jets (21) disposés dans une direction de la largeur du papier d'impression ;
**caractérisé en ce que** les zones divisées aux intervalles prédéterminés sont formées en divisant les images photographiques du deuxième côté en rectangles, chacune avec un côté de celle-ci correspondant à une longueur dans la direction de disposition des jets (21) sur une des têtes de jets (2).

9. Appareil d'inspection d'images selon la revendication 8, comprenant un dispositif d'avertissement pour déterminer un total de défauts pour chacune des têtes de jets (2) en intégrant, dans la direction perpendiculaire à une direction de disposition des jets, le nombre de défauts détectés par le dispositif de détection de défauts sur le premier côté (71) et le nombre de défauts détectés par le dispositif de détection de défauts sur le deuxième côté (81), ce dispositif d'avertissement indiquant qu'une tête de jet (2) avec un total intégré de défauts dépassant un premier seuil est défectueux, et qu'une tête de jet (2) avec un total intégré de défauts plus grand qu'un deuxième seuil et plus petit que le premier seuil a besoin d'être vérifiée.

10. Appareil d'inspection d'images selon l'une quelconque des revendications 1 à 9, **caractérisé en ce que** :
le dispositif d'évaluation de défauts sur le deuxième côté (84) est agencé de façon à appliquer de nouveau le filtre du deuxième côté, avec le réglage de celui-ci changé par le dispositif de changement du réglage du filtre du deuxième côté (83), aux défauts détectés par le dispositif de détection de défauts sur le deuxième côté (81) et compris dans les informations de résultats d'impression ;
le dispositif de commande d'affichage (92) est agencé de façon à afficher les résultats de la nouvelle application du filtre du deuxième côté comme superposé sur les images photographiques du deuxième côté ; et le dispositif de stockage (90) est agencé de façon à stocker le réglage du filtre du deuxième côté appliqué de nouveau, avec les informations des résultats d'impression.
